# EUROPEAN PATENT APPLICATION

(11) **EP 4 496 293 A1**
(43) Date of publication of application: **22.01.2025**
(21) Application number: 24188078.0
(22) Date of filing: 11.07.2024
(51) Int. Cl.: H04L 67/125, G06Q 50/50, H04Q 9/02, H04W 4/02, H04W 4/38, H04W 4/021, H04W 4/90

(54) **METHODS AND APPARATUSES FOR PROVIDING A GEOGRAPHIC LOCATION OF A SENSOR FOR ACQUIRING DATA**

(30) Priority: 20.07.2023 FI 20235833
(71) Applicant: Nokia Solutions and Networks Oy, 02610 Espoo (FI)
(72) Inventor: MONSHIZADEH, Mehrnoosh, Saint Germain les Arpajon (FR); KHATRI, Vikramajeet, Espoo (FI); SUBRAMANYA, Tejas, Munich (DE); TIIRIKAINEN, Kari Jukka Tapio, Vantaa (FI); HELLGREN, Vesa Pauli, Helsinki (FI); MICHE, Yoan Jean Claude, Klaukkala (FI)
(74) Representative: Nokia EPO representatives

(57) **Abstract**

Methods and apparatuses for providing a geographic location of a sensor (104) for acquiring data, wherein a first method in a first apparatus (112) comprises to receive (204) a request for a geographic location of a sensor (104) for acquiring data from a first apparatus, to request (206) the geographic location from a second apparatus (102) that is configured to operate a core of a communication network (100), to receive (212) the geographic location from the second apparatus (102), and to send (214) the geographic location, wherein a second method comprises to receive (206) a request from the first apparatus (112) for a geographic location of a sensor (104) for acquiring data, to request (208) the geographic location from the sensor (104), to receive (210) the geographic location from the sensor (104), and to send (212) the geographic location to the first apparatus (112).

## Description

### Field of the invention

The disclosure herein relates to methods and apparatuses for providing a geographic location of a sensor for acquiring data.

### Background

Data analytic and machine learning techniques are a key success for big data analysis.

### Summary

A first apparatus, wherein the first apparatus is configured to receive a request for a geographic location of a sensor for acquiring data, to request the geographic location from a second apparatus that is configured to operate a core of a communication network, to receive the geographic location from the second apparatus, and to send the geographic location.

According to some examples, the first apparatus is configured to send the geographic location to an apparatus that is configured to detect an anomaly based on the data.

According to some examples, the first apparatus is configured to receive the request from an apparatus that is configured to detect an anomaly based on the data.

According to some examples, the first apparatus is configured to send the geographic location to an apparatus that is configured to respond to an anomaly based on the geographic location.

According to some examples, the first apparatus is configured to receive an identification of the sensor, and to send the identification to the second apparatus.

A second apparatus, wherein the second apparatus is configured to operate a core of a communication network, wherein the second apparatus is configured to receive a request from a first apparatus for a geographic location of a sensor for acquiring data, and to send the geographic location to the first apparatus, wherein the second apparatus is configured to request the geographic location from the sensor, and to receive the geographic location from the sensor.

According to some examples, the second apparatus is configured to operate a plurality of sensors for acquiring data in a plurality of networks, to receive an identification of the sensor, to select a network that comprises the sensor from the plurality of networks depending on the identification, and to communicate with the sensor in the selected network.

A third apparatus, wherein the third apparatus is configured to receive data from a sensor for acquiring the data, to detect an anomaly depending on the data, to send a request for a geographic location of the sensor to a first apparatus that is configured to request the geographic location of the sensor from a second apparatus that is configured to operate a core of a communication network, to receive the geographic location from the first apparatus, and to send information about the anomaly and the geographic location or to evaluate the anomaly depending on the geographic location.

A fourth apparatus, wherein the fourth apparatus is configured to receive, from a first apparatus that is configured to request the geographic location of the sensor from a second apparatus that is configured to operate a core of a communication network, information about an anomaly that is detected depending on data, to receive a geographic location of a sensor that acquired the data, and to evaluate the anomaly depending on the geographic location.

A first method, wherein the first method comprises to receive a request for a geographic location of a sensor for acquiring data, to request the geographic location from a second apparatus that is configured to operate a core of a communication network, to receive the geographic location from the second apparatus, and to send the geographic location.

According to some examples, the first method comprises to send the geographic location to an apparatus that is configured to detect an anomaly based on the data.

According to some examples, the first method comprises to receive the request from an apparatus that is configured to detect an anomaly based on the data.

According to some examples, the first method comprises to send the geographic location to an apparatus that is configured to respond to an anomaly based on the geographic location.

According to some examples, the first method comprises to receive an identification of the sensor, and to send the identification to the second apparatus.

A second method, wherein the second method comprises, at a second apparatus that is configured to operate a core of a communication network, to receive a request from a first apparatus for a geographic location of a sensor for acquiring data, to request the geographic location from the sensor, to receive the geographic location from the sensor, and to send the geographic location to the first apparatus.

According to some examples, the second method comprises to operate a plurality of sensors for acquiring data in a plurality of networks, to receive an identification of the sensor, to select a network that comprises the sensor from the plurality of networks depending on the identification, and to communicate with the sensor in the selected network.

A third method, wherein the third method comprises to receive data from a sensor for acquiring the data, to detect an anomaly depending on the data, to send a request for a geographic location of the sensor to a first apparatus that is configured to request the geographic location of the sensor from a second apparatus that is configured to operate a core of a communication network, to receive the geographic location from the first apparatus, and to send information about the anomaly and the geographic location or to evaluate the anomaly depending on the geographic location.

A fourth method, wherein the fourth method comprises to receive, from a first apparatus that is configured to request the geographic location of the sensor from a second apparatus that is configured to operate a core of a communication network, information about an anomaly that is detected depending on data, to receive a geographic location of a sensor that acquired the data, and to evaluate the anomaly depending on the geographic location.

A first apparatus, wherein the first apparatus comprises a first receiver that is configured to receive a request for a geographic location of a sensor for acquiring data, wherein the first apparatus comprises a first sender that is configured to request the geographic location from a second apparatus that is configured to operate a core of a communication network, wherein the first apparatus comprises a second receiver that is configured to receive the geographic location from the second apparatus, and wherein the first apparatus comprises a second sender that is configured to send the geographic location.

According to some examples the second sender is configured to send the geographic location to a third apparatus that is configured to detect an anomaly based on the data.

According to some examples the first receiver is configured to receive the request from a third apparatus that is configured to detect an anomaly based on the data.

According to some examples the second sender is configured to send the geographic location to a fourth apparatus that is configured to respond to an anomaly based on the geographic location.

According to some examples the first receiver is configured to receive an identification of the sensor, and wherein the second sender is configured to send the identification to the second apparatus.

A second apparatus, wherein the second apparatus is configured to operate a core of a communication network, wherein the second apparatus comprises a first receiver that is configured to receive a request from a first apparatus for a geographic location of a sensor for acquiring data, and wherein the second apparatus comprises a first sender that is configured to send the geographic location to the first apparatus, wherein the second apparatus comprises a second sender that is configured to request the geographic location from the sensor, and wherein second apparatus comprises a second receiver that is configured to receive the geographic location from the sensor.

According to some examples the second apparatus comprises an entity that is configured to operate a plurality of sensors for acquiring data in a plurality of networks, wherein the first receiver is configured to receive an identification of the sensor, wherein the entity is configured to select a network that comprises the sensor from the plurality of networks depending on the identification, and to communicate with the sensor in the selected network.

A third apparatus, wherein the third apparatus comprises a first receiver that is configured to receive data from a sensor for acquiring the data, wherein the third apparatus comprises an entity that is configured to detect an anomaly depending on the data, wherein the third apparatus comprises a sender that is configured to send a request for a geographic location of the sensor to a first apparatus that is configured to request the geographic location of the sensor from a second apparatus that is configured to operate a core of a communication network, wherein the third apparatus comprises a second receiver that is configured to receive the geographic location from the first apparatus, and wherein the sender is configured to send information about the anomaly and the geographic location or wherein the entity is configured to evaluate the anomaly depending on the geographic location.

A fourth apparatus, wherein the fourth apparatus comprises a receiver that is configured to receive, from a first apparatus that is configured to request the geographic location of the sensor from a second apparatus that is configured to operate a core of a communication network, information about an anomaly that is detected depending on data, and to receive a geographic location of a sensor that acquired the data, and wherein the fourth apparatus comprises an entity that is configured to evaluate the anomaly depending on the geographic location.

Further exemplary embodiments are derived from the following description and the drawing.

### Brief description of the figures

- Fig. 1: schematically depicts a communication network,
- Fig. 2: schematically depicts a sequence diagram.

### Description of the embodiments

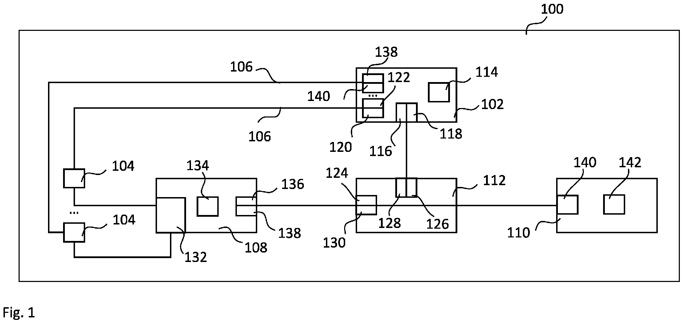

Figure 1 schematically depicts a communication network 100.

The communication network 100 comprises an apparatus 102 for operating the communication network 100. The apparatus 102 for operating the communication network 100 is referred to as operator.

The communication network 100 comprises a plurality of sensors 104 for acquiring data in a plurality of networks 106. The sensors 104 are for example internet of things, IoT, devices. According to an example, the sensors 104 are associated with a respective identification. The identification may be unambiguous in the communication network 100.

The sensors 104 are for example connected to the communication network 100 by wire or wirelessly. A sensor 104 may be connected to the communication network 100 via another sensor 104.

The sensors 104 may be located at different geographic locations. The geographic location of a sensor 104 is in the example known to the sensor 104. A sensor 104 is for example configured to store its geographic location or to retrieve its geographic location, e.g., via a Global Satellite Navigation System or via a wireless triangulation in the communication network 100.

The automated, efficient, and reliable provisioning of geographic locations of the sensor 104 or of the sensors 104 enables advanced data analytic and machine learning techniques in forthcoming communication networks.

The communication network 100 comprises an apparatus 108 that is configured to detect an anomaly depending on data that is acquired by one of the sensors 104 or by multiple sensors 104. The apparatus 108 that is configured to detect the anomaly is referred to as Intelligent & Autonomous Security Service, IASS.

The IASS 108 may be configured to receive the geographic location and evaluate the anomaly depending on the geographic location.

The communication network 100 may comprise an apparatus 110 that is configured to evaluate the anomaly depending on the geographic location. The apparatus 110 that is configured to evaluate the anomaly is referred to as Associated Public Safety Agency, APSA. The APSA 110 may be operated for example by an emergency response agency, a health agency, or firefighting department.

The APSA 110 may be configured to receive information about the anomaly and the geographic location and to evaluate the anomaly depending on the geographic location. The APSA 110 may be configured to select an action the APSA 110 takes from a plurality of actions depending on a priority that is associated with the geographic location.

The communication network 100 comprises an apparatus 112 for orchestrating the communication between the operator 102, the IASS 108 and the APSA 110. The apparatus 112 for orchestrating the communication is referred to as orchestrator.

The orchestrator 112 enables the IASS 108 to communicate with a core of the communication network 100, i.e., the operator 102, to obtain the geographic location. The orchestrator 112 may enable the IASS 108 to update the APSA 110 with the geographic location information.

The operator 102 may provide the geographic location of a sensor 104 from a location database or in real-time from the sensor 104.

The orchestrator 112 may be configured to share information about an abnormal behavior with the APSA 110.

The orchestration is not limited to sharing information with one APSA. The orchestrator 112 may be configured to select the APSA 110 from a plurality of APSA depending on the type of information about the abnormal behavior.

The orchestration is not limited to providing the geographic location to one IASS. The orchestrator 112 may be configured to select the IASS 108 from a plurality of IASS depending on a priority that is associated with a mission or an application that the IASS 108 serves.

The orchestrator 112 may be configured to track the geographic location of one sensor 104 or several sensors 104. The IASS 108 and the operator 102 and the orchestrator 112 may be configured to track the geographic location of a sensor 104 by interacting with each other.

The IASS 108 and the operator 102 and the orchestrator 112 may be configured to provide a life feed of data from sensor 104 at a predetermined geographic location by interacting with each other.

The IASS 108 and the operator 102 and the orchestrator 112 may be configured to update the network 106 that comprises the sensor 104 or the networks 106 that comprises the sensor 104 by interacting with each other to maintain the life feed in particular in case the sensor 104 moves or the network 106 changes.

Where there are multiple instances of IASS modules (due to load balancing, coverage reasons or geographic location information will be forwarded to Orchestrator, which connects to core network in order to update the network configuration and track the location of the IoT device.

A request for a geographic location of a sensor 104 may comprise:

An immediate location request, i.e., a request to get the geographic location for the sensor 104. The sensor 104 may be a user equipment, UE. the sensor 104 may be a moving object.

A deferred location request, i.e., a request to get the geographic location for the sensor 104 at some future time or at future times.

The request may be a request for the geographic location of a group of sensors 104, e.g., target UEs within a short time period.

The request may be may be associated with specific events associated with the sensor 104 or the sensors 104.

An specific event may be:
An event that the sensor 104 enters, leaves, or remains within a pre-defined geographical area.

A periodically created report of the geographic location.

A motion, i.e., when the sensor 104 moves by more than some predefined straight-line distance from a previous location.

The orchestrator 112 is configured to receive the request for a geographic location of a sensor 104, to request the geographic location from the operator 102, to receive the geographic location from the operator 102, and to send the geographic location. The orchestrator 112 may be configured to send the geographic location to the IASS 108. The orchestrator 112 may be configured to send the geographic location to the APSA 110.

According to an example, the operator 102 comprises an entity 114 for retrieving the geographic location of a sensor 104 and for providing the geographic location.

The entity 114 for retrieving the geographic location may be configured to operate a plurality of the sensors 104 in a plurality of networks 106. The entity 114 for retrieving the geographic location may be configured to select a network 106 that comprises the sensor 104 from the plurality of networks 106 depending on the identification of the sensor 104, and to communicate with the sensor in the selected network.

According to an example, the operator 102 comprises a first receiver 116 that is configured to receive a request from the orchestrator 112 for the geographic location of a sensor 104. The request may comprise the identification of the sensor 104.

According to an example, the operator 102 comprises a first sender 118 that is configured to send the geographic location to the orchestrator 112.

According to an example, the operator 102 comprises a second sender 120 that is configured to request the geographic location from the sensor 104.

According to an example, the operator 102 comprises a second receiver 122 that is configured to receive the geographic location from the sensor 104.

In the example depicted in figure 1, the operator 102 comprises a second sender 120 and a second receiver 122 for each of the plurality of networks 106.

According to an example, the orchestrator 112 comprises a first receiver 124 that is configured to receive a request for a geographic location of a sensor 104.

According to an example, the first receiver 124 of the orchestrator 112 is configured to receive the request from the IASS 108.

According to an example, the first receiver 124 of the orchestrator 112 is configured to receive an identification of the sensor 104.

According to an example, the orchestrator 112 comprises a first sender 126 that is configured to request the geographic location from the operator 102.

According to an example, the first sender 126 of the orchestrator 112 is configured to send the identification to the operator 102.

According to an example, the orchestrator 112 comprises a second receiver 128 that is configured to receive the geographic location from the operator 102.

According to an example, the orchestrator 112 comprises a second sender 130 that is configured to send the geographic location.

According to an example, the second sender 130 of the orchestrator 112 is configured to send the geographic location to the IASS 108.

According to an example, the second sender 130 of the orchestrator 112 is configured to send the geographic location to the APSA 110.

According to an example, the IASS 108 comprises a first receiver 132 that is configured to receive data from a sensor 104 or from multiple sensors 104. The first receiver 132 of the IASS 108 may be configured to receive an identification of the sensor 104 or to receive the identifications of the multiple sensors 104.

According to an example, the IASS 108 comprises an entity 134 that is configured to detect an anomaly depending on the data that is received from the sensor 104 or that is received from the multiple sensors 104.

According to an example, the IASS 108 comprises a sender 136 that is configured to send a request for a geographic location of the sensor 104. The sender 136 of the IASS 108 may be configured to send an identification of the sensor 104.

According to an example, the IASS 108 comprises a second receiver 138 that is configured to receive the geographic location from the orchestrator 112.

According to an example, the sender 138 is configured to send information about the anomaly and the geographic location.

According to an example, the entity 134 of the IASS 108 is configured to evaluate the anomaly depending on the geographic location.

According to an example, the APSA 110 comprises a receiver 140 that is configured to receive information about an anomaly that is detected depending on data, and to receive a geographic location of a sensor 104 that acquired the data.

According to an example, the APSA 110 comprises an entity 142 that is configured to evaluate the anomaly depending on the geographic location.

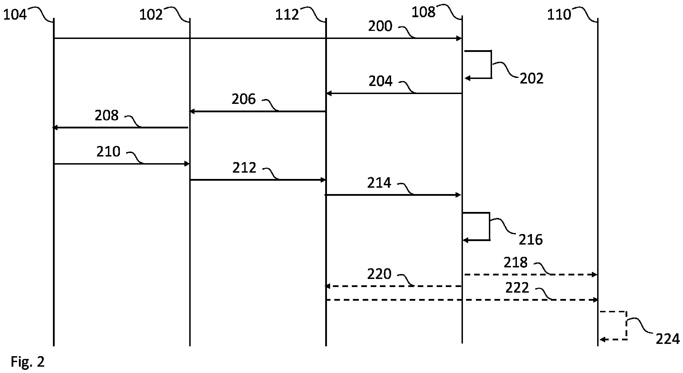

Figure 2 schematically depicts a sequence diagram.

Data that is acquired by a sensor 104 is sent in a step 200 from the sensor 104 to the IASS 108.

The identification of the sensor 104 may be sent in the step 200 from the sensor 104 to the IASS 108.

An anomaly is detected in a step 202 by the IASS 108 depending on the data.

The anomaly of the data is detected in the IASS 108 without processing the geographic location. This means, the geographic location of the sensor 104 that provides the data is not required.

A request for a geographic location of the sensor 104 is sent in a step 204 from the IASS 108 to the orchestrator 112.

The request for the geographic location is sent, for example, to find the location of IoT device that provides the data that contains the anomalous behavior.

The request may be sent only in case an anomaly was detected in the data.

The request may be sent only to the sensor 104 that provided the data in which the anomaly was detected.

The identification of the sensor 104 may be sent in the step 204 from the IASS 108 to the orchestrator 112.

A request for a geographic location of the sensor 104 is sent in a step 206 from the orchestrator 112 to the operator 102.

The identification of the sensor 104 may be sent in the step 206 from the orchestrator 112 to the operator 102.

The request of the orchestrator 112 may be agnostic of the network 106 that comprises the sensor 104.

A request for the geographic location is sent in a step 208 from the operator 102 to the sensor 104.

The request of the operator 102 is sent in the network 106 that comprises the sensor 104.

The operator 102 may operate the plurality of sensors 104. The communication with the sensor 104 may occur in the network 106 of the plurality of networks 106 that comprises the sensor 104. The network 106 may be selected by the operator 102 depending on the identification of the sensor 104.

The geographic location is sent in a step 210 from the sensor 104 to the operator 102.

The geographic location is sent in the network 106 that comprises the sensor 104.

The geographic location is sent in a step 212 from the operator 102 to the orchestrator 112.

The geographic location is sent in a step 214 from the orchestrator 112 to the IASS 108.

The IASS 108 evaluates the anomaly in a step 216 depending on the geographic location.

The IASS 108 may ask help from the APSA.

According to an example, the information about the anomaly and the geographic location is sent by the IASS 108 in a step 218 to the APSA 110.

The IASS 108 may send the information about the anomaly and the geographic location in a step 220 to the orchestrator 112.

The orchestrator 112 may send the information about the anomaly and the geographic location in a step 222 to the APSA.

The IASS 108 may send the information about the anomaly in the step 220 to the orchestrator 112 and the orchestrator 112 may send the geographic location in the step 222 to the APSA 108.

The APSA may evaluate the anomaly depending on the geographic location in a step 224.

The IASS 108 or the APSA 110 may analyze the data that is prepared by the sensor 104, extract an incident from the data, determine the location of the incident depending on the geographic location of the sensor 104 and trigger an action to address the incident or inform a third party about the incident.

The operator 102 resides for example in a core of the communication network 100. The operator 102 provides the geographic location of the sensor 104 for example in real-time.

For example, in a smart city, the IASS 108 analyses the date of a plurality of sensors 104 in order to detect suspicious data or situations that can endanger public safety and security.

The sensors 104 can be installed at various locations in the smart city. The sensors 104 may be smart parking meters, smart electric meters, smart streetlights, and smart transportation systems. The real-time data provided by the sensor 104 is analyzed in order to detect anomalies.

By way of example, some sensors 104 capture video images and audio. The video images and audio are analyzed to identify and track individual unsafe activities.

The video images are useful for a limited area which is visible by the sensor 104. For example, in a case of activity out of the limited area, the audio may still capture useful information from outside the limited area.

The audio is useful for limited conditions. For example, in case of a low-quality voice of a person due to illness or mood, the video may still capture useful information that is independent of the voice.

The orchestration enables access to the geographic location of the sensors 104 in order request the geographic location of the sensors 104 and to correlate the data collection between sensors 104 depending on their geographic location.

The sensors 104 may be in the same network 106 or may be in different networks 106. The IASS 108 or the APSA 110 need not knowledge about the network 106 or the networks 106.

The IASS 108 or the APSA 110 may correlate the data of sensors 104 that are installed in essentially the same geographic location.

IASS 108 or the APSA 110 may inform the corresponding geographic location of a target or situation that is identified as incident.

The data is not limited to an audio/video context for data correlation, but the scope is any data and information that can be collected from sensors 104 in general, and that can be used toward a certain monitoring/detection goal.

The IASS 108 or the APSA 110 may employs artificial intelligence, AI, to analyze the data received from sensors 104 in real-time and automatically detect an anomaly.

The IASS 108 or the APSA 110 may determine an urgency of the incident, e.g., whether it is a medical emergency situation, or a threat to people in the area of the geographic location.

The orchestration is not limited to one operator 102.

The IASS 108 or the APSA 110 may send the result of the analysis to a respective operator 102 or to a plurality of operators 102, e.g., via the orchestrator 112 in order to obtain the geographic location of the sensor 104 or the sensors 104.

The IASS 108 or the APSA 110 may employ a response mechanism such as Automated Targeting System (ATS) for situational awareness and to support enhanced mission-critical operations. The IASS 108 or the APSA 110 may be used in support of search and rescue missions in difficult environments, such as tunnels or collapsed or damaged structures.

## Claims

1. An orchestrator apparatus (112), wherein the orchestrator apparatus (112) is configured to receive a request for a geographic location of a sensor (104) for acquiring data, to request the geographic location from an operator apparatus (102) that is configured to operate a core of a communication network (100), to receive the geographic location from the operator apparatus (102), and to send the geographic location;
wherein the orchestrator apparatus (112) is configured to send the geographic location to an Intelligent & Autonomous Security Service, IASS, apparatus (108) that is configured to detect an unsafe activity based on the data;
wherein the orchestrator apparatus (112) is configured to interact with the IASS apparatus (108) and the operator apparatus (102) to provide a life feed of the data from the sensor (104);
wherein the orchestrator apparatus (112) is configured to interact with the IASS apparatus (108) and the operator apparatus (102) to update a network (106) that comprises the sensor 104 or the networks (106) that comprise the sensor (104), to maintain the life feed in case the sensor (104) moves or the network(s) (106) change.

2. The orchestrator apparatus (112) according to claim 1, wherein the orchestrator apparatus (112) is configured to receive the request from an Intelligent & Autonomous Security Service, IASS, apparatus (108) that is configured to detect the unsafe activity based on the data.

3. The orchestrator apparatus (112) according to one of the claims 1 to 2, wherein the orchestrator apparatus (112) is configured to send the geographic location to an Associated Public Safety Agency, APSA, apparatus (110) that is configured to respond to the unsafe activity based on the geographic location.

4. The orchestrator apparatus (112) according to one of the claims 1 to 3, wherein the orchestrator apparatus (112) is configured to receive an identification of the sensor (104), and to send the identification to the operator apparatus (102) .

5. An operator apparatus (102), wherein the operator apparatus (102) is configured to operate a core of a communication network (100), wherein the operator apparatus (102) is configured to receive a request from an orchestrator apparatus (112) for a geographic location of a sensor (104) for acquiring data, and to send the geographic location to the orchestrator apparatus (112), wherein the operator apparatus (102) is configured to request the geographic location from the sensor (104), and to receive the geographic location from the sensor (104);
wherein the operator apparatus (102) is configured to operate a plurality of sensors (104) for acquiring data in a plurality of networks (106), to receive an identification of the sensor (104), to select a network (106) that comprises the sensor (104) from the plurality of networks (106) depending on the identification, and to communicate with the sensor (104) in the selected network (106);
wherein the operator apparatus (102) is configured to interact with the orchestrator apparatus (112) and the IASS apparatus (108) to provide a life feed of the data from the sensor (104);
wherein the operator apparatus (102) is configured to interact with the orchestrator apparatus (112) and the IASS apparatus (108) to update the network(s) (106) that comprise the sensor (104) to maintain the life feed in case the sensor (104) moves or the network(s) (106) change.

6. An Intelligent & Autonomous Security Service, IASS, apparatus (108), wherein the IASS apparatus (108) is configured to receive data from a sensor (104) for acquiring the data, to detect an unsafe activity depending on the data, to send a request for a geographic location of the sensor (104) to an orchestrator apparatus (112) that is configured to request the geographic location of the sensor (104) from an operator apparatus (102) that is configured to operate a core of a communication network (100), to receive the geographic location from the orchestrator apparatus (112), and to send information about the unsafe activity and the geographic location or to evaluate the unsafe activity depending on the geographic location;
wherein the IASS apparatus (108) is configured to interact with the operator apparatus (102) and the orchestrator apparatus (112) to provide a life feed of the data from the sensor (104);
wherein the IASS apparatus (108) is configured to interact with the operator apparatus (102) and the orchestrator apparatus (112) to update a network (106) that comprises the sensor 104 or the networks (106) that comprise the sensor (104) to maintain the life feed in case the sensor (104) moves or the network(s) (106) change.

7. A first method in an orchestrator apparatus (112), wherein the first method comprises to receive (204) a request for a geographic location of a sensor (104) for acquiring data, to request (206) the geographic location from an operator apparatus (102) that is configured to operate a core of a communication network (100), to receive (212) the geographic location from the operator apparatus (102), and to send (214) the geographic location;
wherein the first method comprises to send (214) the geographic location to an Intelligent & Autonomous Security Service, IASS, apparatus (108) that is configured to detect an unsafe activity based on the data,
wherein the first method comprises the orchestrator apparatus (112) interacting with the IASS apparatus (108) and the operator apparatus (102) to provide a life feed of the data from the sensor (104);
wherein the first method comprises the orchestrator apparatus (112) interacting with the IASS apparatus (108) and the operator apparatus (102) to update a network (106) that comprises the sensor 104 or the networks (106) that comprise the sensor (104), to maintain the life feed in case the sensor (104) moves or the network(s) (106) change.

8. The first method according to claim 7, wherein the first method comprises to receive (204) the request from the IASS apparatus (108) that is configured to detect the unsafe activity based on the data.

9. The first method according to one of the claims 7 to 8, wherein the first method comprises to send (218) the geographic location to an Associated Public Safety Agency, APSA, apparatus (110) that is configured to respond to an anomaly based on the geographic location.

10. The first method according to claim 7, wherein the first method comprises to receive (204) an identification of the sensor (104), and to send (206) the identification to the operator apparatus (102).

11. A second method, wherein the second method comprises, at an operator apparatus (102) that is configured to operate a core of a communication network (100), to receive (206) a request from an orchestrator apparatus (112) for a geographic location of a sensor (104) for acquiring data, to request (208) the geographic location from the sensor (104), to receive (210) the geographic location from the sensor (104), and to send (212) the geographic location to the orchestrator apparatus (112);
wherein the second method comprises to operate a plurality of sensors (104) for acquiring data in a plurality of networks (106), to receive (206) an identification of the sensor (104), to select a network (106) that comprises the sensor (104) from the plurality of networks (106) depending on the identification, and to communicate with the sensor (104) in the selected network (106),
wherein the second method comprises the operator apparatus (102) interacting with the orchestrator apparatus (112) and the IASS apparatus (108) to provide a life feed of the data from the sensor (104);
wherein the second method comprises the operator apparatus (102) interacting with the orchestrator apparatus (112) and the IASS apparatus (108) to update the network(s) (106) that comprise the sensor (104) to maintain the life feed in case the sensor (104) moves or the network(s) (106) change.

12. A third method, wherein the third method comprises, by an Intelligent & Autonomous Security Service, IASS, apparatus (108), to receive (200) data from a sensor (104) for acquiring the data, to detect (202) an unsafe activity depending on the data, to send (204) a request for a geographic location of the sensor (104) to an orchestrator apparatus (112) that is configured to request the geographic location of the sensor (104) from an operator apparatus (102) that is configured to operate a core of a communication network (100), to receive (214) the geographic location from the orchestrator apparatus (112), and to send (220) information about the unsafe activity and the geographic location or to evaluate (216) the unsafe activity depending on the geographic location,.
the third method comprises the IASS apparatus (108) interacting with the operator apparatus (102) and the orchestrator apparatus (112) to provide a life feed of the data from the sensor (104);
the third method comprises the IASS apparatus (108) interacting with the operator apparatus (102) and the orchestrator apparatus (112) to update a network (106) that comprises the sensor 104 or the networks (106) that comprise the sensor (104) to maintain the life feed in case the sensor (104) moves or the network(s) (106) change.
